# DEMANDE DE BREVET EUROPEEN

(11) **EP 3 001 608 A1**
(43) Date de publication de la demande: **30.03.2016**
(21) Numéro de dépôt: 14306508.4
(22) Date de dépôt: 29.09.2014
(51) Int. Cl.: H04L 12/28

(54) **Procédé de configuration d'un système d'objets connectés dans un réseau internet pour objets et centrale de configuration correspondante**

(71) Demandeur: GEMALTO SA, 92190 Meudon (FR)
(72) Inventeur: CRUVELLIER, Baptiste, CS12023-13881 Gemenos Cedex (FR); MAURO, Fabien, CS12023-13881 Gemenos Cedex (FR); DELSUC, Julien, CS12023-13881 Gemenos Cedex (FR)

(57) **Abrégé**

L'invention concerne notamment un procédé de configuration d'un système d'objets connectés (20-27) dans un réseau Internet pour objets, les objets connectés (20-27) étant présents dans au moins une pièce (10-13), le procédé consistant à :
a. Former des groupes logiques d'objets connectés (20-22, 23, 24-25, 26-27) en se basant sur les distances respectives séparant les objets connectés (20-27) ;
b. Identifier chaque type de pièce (10-13) en fonction des objets connectés (20-27) présents dans chaque groupe logique ;
c. Appliquer aux objets connectés (20-27) des règles de fonctionnement liées à leur appartenance à chaque type de pièce (10-13).

## Description

Le domaine de l'invention est celui de l'Internet des objets (IoT en anglais). Plus précisément, la présente invention concerne un procédé permettant de configurer un système d'objets connectés.

L'Internet des objets est le domaine des objets connectés, entre eux et/ou au réseau Internet. Il s'agit par exemple d'ampoules, d'appareils audio, d'objets de la vie courante comme des brosses à dents ou des bouilloires à eau, des portails électriques, des compteurs d'électricité, des véhicules, des systèmes d'arrosage... Ces objets peuvent être pilotés à partir d'une centrale, soit par des prises intelligentes (permettant par exemple de mettre sous/hors tension un objet), soit par ondes radio (les objets coopèrent avec des modems radio), ou les deux. La centrale est connectée à tous les objets et peut être connectée à Internet pour pouvoir interagir avec les objets à distance. Il s'agit dans ce dernier cas d'une passerelle Internet.

La configuration d'un tel réseau permet à son utilisateur de commander les différents objets qui le constituent selon son désir. On peut ainsi programmer chaque objet individuellement, par exemple en appliquant des règles de fonctionnement.

Un exemple de règles est le suivant : lorsque le réveil sonne, la lumière s'allume progressivement dans la chambre à coucher et le chauffage se met en route dans la salle de bain. Cinq minutes plus tard, le chauffe-eau se met en route dans la cuisine. Si la présence de l'utilisateur est détectée dans la cuisine (par exemple grâce à un détecteur de présence ou si son téléphone portable s'est approché de la cuisine et y est présent), la lumière de la cuisine s'allume et cette de la chambre s'éteint, de même que le chauffage de la salle de bain. Lorsque l'utilisateur quitte son domicile, toutes les lumières intérieures s'éteignent, le portail s'ouvre et son véhicule se met en marche. L'alarme du domicile se met également en fonction.

Ces règles sont classiquement programmées par l'utilisateur à l'aide d'un ordinateur connecté à la centrale. La centrale peut également être constituée par un ordinateur à l'aide de l'interface homme-machine duquel l'utilisateur peut établir des règles de fonctionnement de ses différents objets connectés.

L'inconvénient de cette solution est que l'utilisateur doit programmer indépendamment chacun des objets connectés, en fonction de leur localisation dans son logement ou sa maison. Il doit donc identifier la position de chaque objet connecté (pièce dans laquelle l'objet en question est situé) et lui attribuer une règle de fonctionnement. Ceci est fastidieux et n'est pas à la portée d'un utilisateur lambda. La complexité de la programmation augmente également avec le nombre d'objets connectés et comme ceux-ci sont amenés à se multiplier dans les années qui viennent, la complexité ira de manière grandissante.

La présente invention a notamment pour objectif de remédier à cet inconvénient.

Plus précisément, un des objectifs de l'invention est de fournir un procédé, mis par exemple en oeuvre dans une centrale de commande d'objets connectés, permettant de configurer automatiquement un système d'objets connectés, sans intervention de l'utilisateur.

Cet objectif, ainsi que d'autres qui apparaîtront par la suite, est atteint grâce à un procédé de configuration d'un système d'objets connectés dans un réseau Internet pour objets, les objets connectés étant présents dans au moins une pièce, le procédé consistant à:
a. Former des groupes logiques d'objets connectés en se basant sur les distances respectives séparant les objets connectés ;
b. Identifier chaque type de pièce en fonction des objets connectés présents dans chaque groupe logique ;
c. Appliquer aux objets connectés des règles de fonctionnement liées à leur appartenance à chaque type de pièce.

Avantageusement, l'étape -a- consiste à connecter les objets connectés directement par un lien physique ou radio ou indirectement en les alimentant par une prise commandée par lien physique ou radio.

Préférentiellement, l'étape -b- consiste à identifier le type de pièce par rapport au mode d'utilisation dans le temps des objets connectés.

Une autre solution, complémentaire de la précédente, consiste à identifier le type de pièce par rapport aux types d'objets connectés qu'elle contient.

Le type d'objets connectés est préférentiellement directement fourni par les objets connectés ou déterminé en fonction du profil de consommation de courant dans le temps des objets connectés.

L'invention concerne également une centrale de configuration d'un système d'objets connectés dans un réseau Internet pour objets, les objets connectés étant présents dans au moins une pièce, cette centrale comprenant :
a. des moyens pour former des groupes logiques d'objets connectés en se basant sur les distances respectives séparant les objets connectés ;
b. des moyens pour identifier chaque type de pièce en fonction des objets connectés présents dans chaque groupe logique ;
c. des moyens pour appliquer aux objets connectés des règles de fonctionnement liées à leur appartenance à chaque type de pièce.

Préférentiellement, les moyens pour identifier chaque type de pièce comprennent des moyens d'analyse des modes d'utilisation dans le temps des objets connectés.

Avantageusement, les moyens pour identifier chaque type de pièce comprennent des moyens de reconnaissance des types d'objets connectés qu'elle contient.

De manière éventuellement complémentaire, les moyens pour identifier chaque type de pièce comprennent des moyens d'analyse du profil de consommation de courant dans le temps des objets connectés.

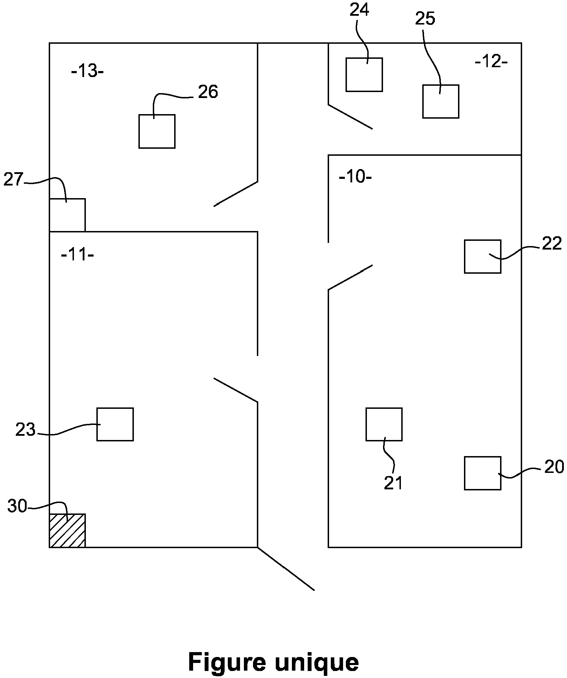

D'autres caractéristiques et avantages de l'invention apparaîtront à la lecture de la description suivante d'un mode de mise en oeuvre préférentiel, donné à titre illustratif et non limitatif, et de la figure unique annexée qui représente un système d'objets connectés selon l'invention.

La figure unique représente un logement comprenant quatre pièces 10 à 13. La pièce 10 est par exemple un salon, la pièce 11 une chambre à coucher, la pièce 12 une cuisine et la pièce 13 une salle de bain. Chaque pièce renferme notamment plusieurs objets connectés :
- Le salon 10 comprend un téléviseur 20, un appareil audio tel qu'une chaîne hifi 21 et une lampe 22 ;
- La chambre à coucher 11 comprend une lampe 23 ;
- La cuisine 12 comprend une bouilloire à eau 24 et une lampe 25 ;
- La salle de bain 13 comprend une lampe 26 et un chauffe-serviettes 27.

Une centrale 30 de configuration des objets connectés est présente dans la chambre à coucher 11. La centrale 30 peut par exemple se présenter sous la forme d'un ordinateur, connecté ou non à Internet, et est apte à communiquer avec les objets connectés 20 à 27. La centrale 30 peut également être une passerelle Internet ou un ordinateur relié à une telle passerelle, l'essentiel étant qu'elle constitue un point central apte à communiquer avec tous les objets connectés du système à configurer, soit par un réseau filaire, soit par un réseau sans fil, par exemple de type Bluetooth ou Wi-Fi.

Le procédé de l'invention consiste en trois étapes mises en oeuvre par la centrale 30 :

La première étape consiste à former des groupes logiques d'objets connectés en se basant sur les distances respectives séparant les objets connectés.

On entend par distances respectives les distances séparant les différents objets connectés. On a ici par exemple, dans la pièce 10, trois distances respectives, cette séparant les objets 20 et 21, cette séparant les objets 20 et 22 et cette séparant les objets 21 et 22. On a également des distances respectives entre les objets de chacune des pièces 10 à 13 du logement. Comme chacun des huit objets 20 à 27 est relié à sept autres objets, il existe ici en tout 28 distances respectives.

La mesure de ces distances respectives peut être effectuée par différents moyens :
- chaque objet 20 à 27 peut transmettre régulièrement à la centrale 30 le niveau de signal (RSSI) reçu des autres objets. Chaque objet 20 à 27 transmet à cet effet un identifiant qui lui est propre et les objets qui l'entourent reçoivent cet identifiant avec un certain niveau de puissance de signal. De prime abord, plus un objet est proche d'un autre objet, plus le niveau de signal reçu de cet objet est fort, et réciproquement. Ces objets peuvent alors informer la centrale des niveaux de signal reçus des autres objets, avec leurs identifiants respectifs. La centrale 30 peut alors utiliser un algorithme de regroupement (« clustering » en anglais) pour former des groupes logiques ;
- la centrale 30 peut également recevoir directement les identifiants des différents objets, à des niveaux qui diffèrent en fonction de leur éloignement. Là aussi, la centrale 30 peut former des groupes logiques d'objets en utilisant un algorithme de regroupement.

A titre d'exemple, si l'on considère en simplifiant les distances séparant les objets 20 à 22 :
d(20, 21) = d(20, 22) = d(21, 22) = 2 mètres
avec d(x,y) étant la distance séparant les objets x et y
   et les distances séparant les objets 24 et 25 :
d(24, 25) = 1 mètre
on aura observé que d([20-22], [24-25]) > 4 mètres,
ce dernier représentant la distance séparant les groupes 20 à 22 et 25-25, c'est-à-dire que les objets 20 à 22 ne sont pas situés dans la même pièce que les objets 24 et 25. Ils font donc partie de deux groupes logiques différents.

On notera que l'algorithme de regroupement sera plus efficace si la centrale 30 n'est pas située au milieu du logement, afin de maximiser la distance qui la sépare de l'objet le plus distant (comme montré sur la figure, la centrale 30 est placée le plus loin possible de la lampe 25 qui est de ce fait l'objet le plus éloigné de la centrale 30).

Les objets peuvent également être connectés indirectement en les alimentant par une prise commandée par un lien physique ou radiofréquence. Une telle prise permet :
- d'allumer ou d'éteindre à distance un objet en alimentant ou non cet objet ;
- De contrôler le bon fonctionnement de l'objet en étudiant sa courbe de fonctionnement (par exemple, un réfrigérateur ouvert consomme plus qu'un réfrigérateur fermé).

A l'issue de cette première étape, la centrale aura identifié quatre groupes logiques :
- un premier groupe logique comprenant les objets 20 à 22 ;
- un deuxième groupe logique comprenant uniquement l'objet 23 ;
- un troisième groupe logique comprenant les objets 24 et 25 ;
- un quatrième groupe logique comprenant les objets 26 et 27.

La deuxième étape du procédé selon l'invention consiste à identifier chaque type de pièce en fonction des objets connectés présents dans chaque groupe logique.

Cette étape peut consister à identifier le type de pièce par rapport au mode d'utilisation dans le temps des objets connectés.

Si par exemple, la première consommation de courant détectée dans la journée sur un objet connecté l'est à 6h00 du matin, il s'agit probablement d'un réveil ou d'une ampoule qui se trouve dans la chambre à coucher 11. La centrale considérera donc que le groupe auquel appartient cet objet connecté est situé dans une chambre à coucher.

Le profil de consommation de courant dans le temps des objets connectés peut également être pris en compte : la quantité de courant consommé peut également permettre de distinguer le réveil de l'ampoule (un réveil consomme moins qu'une ampoule et est alimenté en permanence, ce qui n'est pas le cas d'une ampoule). Il est également possible de considérer que le réveil sonne avant que l'utilisateur n'allume l'ampoule. Cette chronologie dans le temps permet de caractériser le type de chaque objet connecté, ainsi que la pièce dans laquelle ils se trouvent. Les identifiants des objets connectés reçus par la centrale 30 peuvent également être utilisés pour identifier le type de chaque objet connecté présent dans une pièce, ainsi que la pièce dans laquelle ils se trouvent.

Si ensuite l'utilisateur se rend dans la salle de bain 13 et y allume la lumière 26 et le chauffe-serviettes 27, la consommation de courant de ces deux objets permettra de les distinguer car un chauffe-serviettes consomme bien plus qu'une simple ampoule.

Les consommations de courant peuvent être obtenues à l'aide de prises intelligentes qui mesurent le courant consommé par chaque objet et qui en informent la centrale 30.

La troisième étape de l'invention consiste à appliquer aux objets connectés des règles de fonctionnement liées à leur appartenance à chaque type de pièce.

Ces règles de fonctionnement peuvent soit être :
- prédéfinies : elles sont fixées par le fabricant de la centrale 30 et paramétrées pour une utilisation standard ;
- définies par l'utilisateur, comme dans l'état de la technique ;
- issues d'un auto-apprentissage en fonction des habitudes de l'utilisateur ;
- un résultat de plusieurs des solutions évoquées ci-dessus.

L'invention n'est pas limitée à un réseau où les objets connectés sont fixes (lampes, bouilloires, chauffe-serviettes,...) : un téléphone portable porté par l'utilisateur peut permettre de localiser celui-ci. Par une communication Wifi ou Bluetooth par exemple, il est possible de savoir dans quelle pièce ce trouve ce téléphone et donc son porteur. Il est dès lors possible de commander les objets connectés en fonction de la position de l'utilisateur : s'il approche de son domicile, la lumière de l'entrée va s'allumer et son portail va se fermer. Il est également possible de prévoir un logiciel dans le téléphone présentant une touche unique à activer, par exemple sur son écran tactile. L'appui sur cette touche va déclencher une action qui est fonction de la position de l'utilisateur : s'il est dans son véhicule, ce dernier va démarrer et son portail va s'ouvrir, s'il est dans son salon, son morceau de musique favori sera reproduit par sa chaine hifi,...

La centrale 30 met à cette fin à jour les groupes d'objets connectés en permanence, par exemple toutes les cinq secondes, afin de connaître la position de chacun des objets connectés dans le temps.

L'invention concerne également une centrale de configuration d'un système d'objets connectés dans un réseau Internet pour objets, les objets connectés étant présents dans au moins une pièce, la centrale comprenant :
a. des moyens pour former des groupes logiques d'objets connectés en se basant sur les distances respectives séparant les objets connectés ;
b. des moyens pour identifier chaque type de pièce en fonction des objets connectés présents dans chaque groupe logique ;
c. des moyens pour appliquer auxdits objets connectés des règles de fonctionnement liées à leur appartenance à chaque type de pièce.

Les moyens pour identifier chaque type de pièce comprennent préférentiellement des moyens d'analyse des modes d'utilisation dans le temps des objets connectés.

Les moyens pour identifier chaque type de pièce comprennent de préférence des moyens de reconnaissance des types d'objets connectés qu'elle contient et/ou des moyens d'analyse du profil de consommation de courant dans le temps des objets connectés.

La notion de pièce est importante pour déterminer la portée dans l'espace des règles. A titre d'exemple :
- l'appui sur un interrupteur dans la cuisine éteint toutes les lampes de la cuisine mais pas celles du salon ;
- allumer la plaque chauffante dans la cuisine allume automatiquement toutes les ampoules de la cuisine ;
- si la minuterie d'un téléphone présent dans n'importe quelle pièce atteint zéro, la plaque chauffante s'éteint ;
- dans la chambre ne pas allumer la lumière de façon automatique entre minuit et 6h00 du matin ;
- ne pas faire sonner le réveil si une activité est détectée dans une autre pièce.

## Revendications

1. Procédé de configuration d'un système d'objets connectés (20-27) dans un réseau Internet pour objets, lesdits objets connectés (20-27) étant présents dans au moins une pièce (10-13), ledit procédé consistant à :
a. Former des groupes logiques d'objets connectés (20-22, 23, 24-25, 26-27) en se basant sur les distances respectives séparant lesdits objets connectés (20-27) ;
b. Identifier chaque type de pièce (10-13) en fonction des objets connectés (20-27) présents dans chaque groupe logique ;
c. Appliquer auxdits objets connectés (20-27) des règles de fonctionnement liées à leur appartenance à chaque type de pièce (10-13).

2. Procédé selon la revendication 1, **caractérisé en ce que** l'étape -a- consiste à connecter lesdits objets connectés (20-27) directement par un lien physique ou radio ou indirectement en les alimentant par une prise commandée par lien physique ou radio.

3. Procédé selon l'une des revendications 1 et 2, **caractérisé en ce que** l'étape -b- consiste à identifier le type de pièce (10-13) par rapport au mode d'utilisation dans le temps desdits objets connectés (20-27).

4. Procédé selon l'une des revendications 1 et 2, **caractérisé en ce que** l'étape -b- consiste à identifier le type de pièce (10-13) par rapport aux types d'objets connectés (20-27) qu'elle contient.

5. Procédé selon la revendication 4, **caractérisé en ce que** le type d'objets connectés (20-27) est directement fourni par lesdits objets connectés (20-27) ou déterminé en fonction du profil de consommation de courant dans le temps desdits objets connectés (20-27).

6. Centrale (30) de configuration d'un système d'objets connectés (20-27) dans un réseau Internet pour objets, lesdits objets connectés (20-27) étant présents dans au moins une pièce (10-13), ladite centrale (30) comprenant :
a. des moyens pour former des groupes logiques d'objets connectés (20-22, 23, 24-25, 26-27) en se basant sur les distances respectives séparant lesdits objets connectés (20-27) ;
b. des moyens pour identifier chaque type de pièce (10-13) en fonction des objets connectés (20-27) présents dans chaque groupe logique ;
c. des moyens pour appliquer auxdits objets connectés (20-27) des règles de fonctionnement liées à leur appartenance à chaque type de pièce (10-13).

7. Centrale (30) selon la revendication 6, **caractérisée en ce que** lesdits moyens pour identifier chaque type de pièce (10-13) comprennent des moyens d'analyse des modes d'utilisation dans le temps desdits objets connectés (20-27).

8. Centrale (30) selon la revendication 6, **caractérisée en ce que** lesdits moyens pour identifier chaque type de pièce (10-13) comprennent des moyens de reconnaissance des types d'objets connectés (20-27) qu'elle contient.

9. Centrale (30) selon la revendication 6, **caractérisée en ce que** lesdits moyens pour identifier chaque type de pièce (10-13) comprennent des moyens d'analyse du profil de consommation de courant dans le temps desdits objets connectés (20-27).
